# EUROPÄISCHE PATENTSCHRIFT

(11) **EP 2 576 248 B1**
(45) Veröffentlichungstag und Bekanntmachung des Hinweises auf die Patenterteilung: **22.06.2016**
(21) Anmeldenummer: 11735776.4
(22) Anmeldetag: 27.05.2011
(51) Int. Cl.: B60G 13/08, B60G 17/044, B60G 21/05

(54) **ACHSMODUL, INSBESONDERE VERBUNDLENKERACHSE**
AXLE MODULE, IN PARTICULAR TWIST-BEAM REAR AXLE
MODULE D'ESSIEU, EN PARTICULIER ESSIEU À BRAS COMBINÉS

(30) Priorität: 26.05.2011 DE 102011103093; 27.05.2010 DE 102010021674
(43) Veröffentlichungstag der Anmeldung: 10.04.2013
(73) Patentinhaber: KSM Castings Group GmbH, 31137 Hildesheim (DE)
(72) Erfinder: BUSCHJOHANN, Thomas, 31171 Nordstemmen (DE); LACHMUND, Heik, 31188 Holle (DE); SCHALLER, Enrico, 08527 Plauen (DE); HÖLIG, Benjamin, 08523 Plauen (DE); KIESEL, Andreas, 09380 Thalheim (DE)
(74) Vertreter: Patentanwälte Thömen & Körner
(86) Internationale Anmeldenummer: PCT/DE2011/001157
(87) Internationale Veröffentlichungsnummer: WO 2011/147411

(56) Entgegenhaltungen:
- EP-A1- 0 774 369
- EP-A2- 1 036 680
- EP-A2- 2 078 870
- WO-A1-2008/055958
- WO-A1-2008/095286
- DE-A1- 3 447 036
- DE-A1- 19 603 764
- FR-A1- 2 811 938
- FR-A1- 2 888 559

## Beschreibung

Die Erfindung bezieht sich auf ein Achsmodul, insbesondere eine Verbundlenkerachse, für ein Kraftfahrzeug.

Verbundlenkerachsen, wie sie beispielsweise allgemein in der DE 195 35 521 A1 offenbart sind, stellen derzeit die üblichen Hinterachsen für Frontantriebs-Pkw dar und bestehen üblicherweise aus zwei Lenkern, insbesondere Längslenkern, die die Räder tragen bzw. mit diesen verbunden sind, und einem Achskörper, insbesondere einem Querprofil, der die beiden Lenker verbindet.

EP 1 036 680 A, WO 2008/055958 A1, FR 2 888 559 A1 und EP 2 078 870 A2 offenbaren jeweils ein Achsmodul für ein Kraftfahrzeug, das aus zwei Lenkern besteht, die am Fahrzeugaufbau befestigbar sind, die Räder der Achse tragen und die über einen Achskörper miteinander verbunden sind, wobei die Verbindung zwischen Achskörper und dem jeweiligen Lenker eine Klebeverbindung ist.

Der Erfindung liegt die Aufgabe zugrunde, ein solches Achsmodul derart weiter zu bilden, dass das Achsmodul verbesserte fahrdynamische Eigenschaften und verbesserte Komfort- und Akustikeigenschaften aufweist. Der Erfindung liegt außerdem die Aufgabe zugrunde, ein Achsmodul der eingangs genannten Art korrosionsunempfindlicher, besser verarbeitbar sowie kostengünstiger und einfacher herstellbar zu machen. Zudem soll ein Achsmodul der eingangs genannten Art derart weiterentwickelt werden, dass das Gewicht bei gleichzeitig höherer Belastbarkeit verringert wird. Zudem soll eine kompaktere und stabilere Gesamtkonstruktion des Achsmoduls, insbesondere bezogen auf die Klebeverbindung, erhalten werden.

Erfindungsgemäß wird diese Aufgabe bei einem Achsmodul für ein Kraftfahrzeug, das aus zwei Lenkern, vorzugsweise Längslenkern, besteht, die insbesondere über eine Schwenklagerung am Fahrzeugaufbau befestigbar sind, die Räder der Achse tragen und die über einen Achskörper, vorzugsweise einem Querträger, insbesondere einem Querprofil, miteinander verbunden sind, wobei die Verbindung zwischen Achskörper und dem jeweiligen Lenker eine Klebeverbindung ist, durch die kennzeichnenden Merkmale der Ansprüche 1 oder 2 gelöst.

Erfindungsgemäß ist vorgesehen, dass jeder der Lenker eine Aufnahmevorkehrung in Form eines Aufnahmezapfens und einer den Aufnahmezapfen umlaufenden im Lenker angeordneten Nut für den Achskörper aufweist.

In die Nut ist ein Teil des Endbereichs des auf den Aufnahmezapfen aufgebrachten Achskörpers eingebracht, so dass sich der Endbereich des Achskörpers quasi beidseitig, also innen und außen, mit dem Lenker optimiert verkleben lässt. Die Kombination von Aufnahmezapfen und Nut führt dadurch zu einer in ihrer Kompaktheit und Stabilität verbesserten Gesamtkonstruktion des Achsmoduls. Die den Aufnahmezapfen umgebende Nut bildet hierbei vorteilhaft auch eine Anschlagfläche für den jeweiligen Endbereich des auf den Aufnahmezapfen aufgebrachten Achskörpers, so dass das Positionieren reproduzierbar vereinfacht und die Klebeverbindung optimiert wird.

Erfindungsgemäß ist auch vorgesehen, dass ein Verbindungselement, vorzugsweise in Form eines Rohres oder einer Stange, über die Länge des Achskörpers innerhalb des Achskörpers angeordnet ist, welches mit seinem einen Endbereich mit dem einen Lenker und mit seinem anderen Endbereich mit dem anderen Lenker verbunden ist, wobei die Verbindung mittels Verbindungselement eine zusätzliche Verbindung zur vorhandenen Klebeverbindung des Achskörpers mit dem jeweiligen Lenker darstellt, wobei das Verbindungselement derart mit den Lenkern verbunden ist, dass es als ein die beiden Lenker verbindender Zuganker wirksam ist.

Das innerhalb des Achskörpers angeordnete Verbindungselement, welches mit seinem ersten Endbereich mit dem ersten Lenker und mit seinem zweiten Endbereich mit dem zweiten Lenker verbunden stellt eine Verbindung zusätzlich zur Klebeverbindung des Achskörpers mit den Lenkern dar. Durch ein solches Verbindungelement kann vorteilhaft eine vereinfachte Positionierung des Achskörpers zu den Lenkern erreicht werden, was zur einer optimierten Klebeverbindung führt.

Es kann vorteilhaft sein, wenn jeder der Lenker eine Aufnahmevorkehrung in Form einer Aufnahmehülse für den Achskörper aufweist, welche über ihren Umfang zumindest teilweise offen ist.

Dadurch kann das Einbringen des Achskörpers in die Aufnahmehülse und das Ein- bzw. Aufbringen des Klebstoffs in die Aufnahmehülse bzw. auf den Achskörper wesentlich erleichtert werden, wodurch die Klebeverbindung ebenfalls optimiert wird.

Aufgrund der Klebeverbindung sind die Lenker relativ bewegungsunabhängig vom Achskörper, wenn das Achsmodul dynamisch belastet wird. Dadurch verbessern sich die fahrdynamischen Eigenschaften sowie die Komfort- und Akustikeigenschaften des Kraftfahrzeugs. Zudem ist die Herstellung des Achsmoduls, insbesondere die Verbindung zwischen Achskörper und dem jeweiligen Lenker, besonders kostengünstig und einfach herstellbar.

Es kann hierbei von Vorteil sein, wenn die Klebeverbindung durch einen Klebstoff gebildet ist, der nach dem Aushärten derart flexibel oder elastisch ist und vorzugsweise bleibt, dass die Lenker bei dynamischer Belastung des Achsmoduls in gewünschter vorgegebener Weise relativ bewegungsunabhängig vom Achskörper sind.

Es kann zudem vorteilhaft sein, wenn die Klebeverbindung die einzige, vorzugsweise stoffschlüssige Verbindung zwischen dem jeweiligen Lenker und dem Achskörper ist.

Eine stoffschlüssige Verbindung ist eine Verbindung, bei der die Bauteile, hier die Lenker und der jeweilige Endbereich des Achskörpers, so innig miteinander verbunden sind, dass die im Betrieb auftretenden Kräfte durch Kohäsion und Adhäsion übertragen werden.

Für gewisse Gebrauchsfälle kann es vorteilhaft sein, wenn der jeweilige Endbereich des Achskörpers, insbesondere zur Ausbildung einer Verdrehsicherung und/oder einer vorgegebenen Lastverteilung, wenigstens teilweise zusätzlich formschlüssig mit dem jeweiligen Lenker verbunden ist.

Für gewisse Anwendungen kann es vorteilhaft sein, wenn der jeweilige Endbereich des Achskörpers, insbesondere zur Ausbildung einer Verdrehsicherung und/oder einer vorgegebenen Lastverteilung wenigstens teilweise zusätzlich kraftschlüssig mit dem jeweiligen Lenker verbunden ist.

Für einige Gebrauchsfälle kann es vorteilhaft sein, wenn der jeweilige Endbereich des Achskörpers mit dem jeweiligen Lenker wenigstens teilweise zusätzlich durch Umbördeln vorgegebener Bereiche des Achskörpers und/oder des jeweiligen Lenkers verbunden ist.

Für bestimmte Gebrauchsfälle kann es vorteilhaft sein, wenn der jeweilige Endbereich des Achskörpers mit dem jeweiligen Lenker wenigstens teilweise zusätzlich durch Durchsetzfügen bzw. insbesondere Clinchen verbunden ist. Eine Übersicht über das Durchsetzfügen bzw. insbesondere Clinchen findet der Fachmann bei Fahrenwaldt, Hans J./ Schuler, Volkmar: Praxiswissen Schweißtechnik, Berlin - Heidelberg, 2., überarbeitete und erweiterte Auflage, 2008, S. 127 - 130.

Für verschiedene Einsatzfälle kann es zweckmäßig sein, wenn der jeweilige Endbereich des Achskörpers mit dem jeweiligen Lenker wenigstens teilweise zusätzlich durch Nieten, insbesondere Stanznieten verbunden ist.

Für andere Gebrauchsfälle kann es zweckmäßig sein, wenn der jeweilige Endbereich des Achskörpers mit dem jeweiligen Lenker wenigstens teilweise zusätzlich durch Verschrauben verbunden ist.

Für wieder andere Gebrauchsfälle kann es zweckmäßig sein, wenn der jeweilige Endbereich des Achskörpers mit dem jeweiligen Lenker wenigstens teilweise zusätzlich durch Klammern verbunden ist.

Für noch andere Gebrauchsfälle kann es zweckmäßig sein, wenn der jeweilige Endbereich des Achskörpers mit dem jeweiligen Lenker wenigstens teilweise zusätzlich durch Verpressen verbunden ist.

Zur Einstellung vorgegebener Toleranzen und/oder zu Herstellung bzw. Vorbereitung einer optimalen Verbindung zwischen Achskörper und Lenker kann es zweckmäßig sein, wenn die Verbindungsbereiche oder Verbindungsflächen am Achskörper und/oder am jeweiligen Lenker bearbeitet sind. Dabei kann es sich beispielsweise um eine Material abtragende, insbesondere Span abhebende Bearbeitung handeln, die zu einer vorgegebenen Geometrie, insbesondere einer konischen Ausbildung, der Endbereiche des Achskörper und/oder des Verbindungsbereichs im oder am jeweiligen Lenker führt. Es kann sich aber auch um eine die Verbindungsbereiche oder die Verbindungsflächen Material aufrauende Bearbeitung handeln, um beispielsweise die Oberfläche für eine optimierte Klebeverbindung zwischen Achskörper und dem jeweiligen Lenker zu vergrößern. Insbesondere kann es vorteilhaft sein, wenn die Verbindungsbereiche oder die Verbindungsflächen durch eine Kombination verschiedener Bearbeitungsverfahren bearbeitet sind.

Es kann vorteilhaft sein, wenn der Achskörper aus einem anderen Werkstoff hergestellt ist als die Lenker. Durch die Klebeverbindung können Lenker und Achskörper aus unterschiedlichsten und für den jeweiligen Einsatzzweck am besten geeigneten Werkstoffen hergestellt werden, quasi ohne Rücksicht auf die Frage der Verbindbarkeit dieser Werkstoffe.

Insgesamt kann das Gewicht bei verbesserter dynamischer Belastbarkeit des Achsmoduls verringert werden, wenn wenigstens ein Teil des Achsmoduls, vorzugsweise die Lenker, zumindest teilweise aus einem Leichtbauwerkstoff hergestellt ist. Für bestimmte Anwendungsfälle kann ein Leichtmetall als Leichtmaterial vorteilhaft sein. Für andere Anwendungsfälle kann ein Kunststoff als Leichtmaterial vorteilhaft sein. Für wiederum andere Anwendungsfälle kann ein Verbund aus Leichtmetall und Kunststoff vorteilhaft sein. So kann insbesondere eine kompaktere Gesamtkonstruktion eines Achsmoduls erhalten werden.

Das Leichtmetall kann aus Aluminium, Magnesium, Zink oder aus Legierungen mit einem oder mehreren dieser Metalle bestehen. Für gewisse Einsatzzwecke können ein oder mehrere Teile des Achsmoduls, insbesondere der Achskörper, vorteilhaft auch aus Stahl- oder Eisen, insbesondere aus Stahl- oder Eisenguss, bestehen. Für bestimmte Einsatzzwecke kann für ein oder mehrere Teile des Achsmoduls, vorzugsweise für den Achskörper, eine Blechkonstruktion vorteilhaft sein.

Es kann von Vorteil sein, wenn der Kunststoff ein Polyamid, insbesondere ein glasfaserverstärktes Polyamid, ist. Vorteilhaft kann aber auch ein Kunststoff aus Polypropylen, insbesondere glasfaserverstärktem Polypropylen, anwendbar sein. Für bestimmte Einsatzzwecke kann es von Vorteil sein, wenn ein Kunststoff eingesetzt wird, der unter der Bezeichnung Ultramid^{®} A3WG10 CR bekannt ist.

Es kann vorteilhaft sein, wenn jeder der Lenker eine Aufnahmevorkehrung, insbesondere eine Aufnahmehülse und/oder einen Aufnahmezapfen, für den Achskörper aufweist, wobei der Achskörper je nach Anwendungsfall mit seinem jeweiligen Endbereich entweder in die allein vorhandene Aufnahmehülse eingebracht, beispielsweise eingeschoben, oder auf den allein vorhandenen Aufnahmezapfen aufgebracht, beispielsweise aufgeschoben, ist. Für manche Anwendungsfälle kann es aber auch zweckmäßig sein, wenn sowohl Aufnahmehülse als auch Aufnahmezapfen vorhanden sind und der Achskörper mit seinem jeweiligen Endbereich sowohl in die Aufnahmehülse eingebracht als auch auf den Aufnahmezapfen aufgebracht ist. Dabei kann der Grad der jeweiligen Ein- bzw. Aufbringung unterschiedlich sein. Beispielsweise kann der Aufnahmezapfen länger ausgebildet sein als die Aufnahmehülse.

Im einfachsten Fall kann die Aufnahmehülse vorteilhaft ein Ausnehmung oder ein Loch im Lenker sein.

Die Aufnahmehülse kann vorteilhaft einseitig oder beidseitig offen sein.

Es kann aber auch zweckmäßig sein, wenn die Aufnahmehülse als Nut ausgebildet ist, die dann gewissermaßen zumindest einen Teil eines Aufnahmezapfens einschließt. Bei Vorhandensein eines Aufnahmezapfens kann eine Aufnahmehülse in Form einer den Aufnahmezapfen umgebenden Nut vorgegebener Tiefe auch vorteilhaft eine Anschlagfläche für den mit dem jeweiligen Endbereich auf den Aufnahmezapfen aufgebrachten Achskörper bilden, so dass das Positionieren vereinfacht wird.

Es kann zweckmäßig sein, wenn der Aufnahmezapfen massiv ausgebildet ist. Insbesondere für eine Gewichtsoptimierung des Achsmoduls und/oder für eine Optimierung der Verbindung zwischen Achskörper und jeweiligem Lenker kann es aber auch vorteilhaft sein, wenn der Aufnahmezapfen zumindest teilweise hohl, vorzugsweise als Hohlprofil ausgebildet ist und/oder einseitig eingebrachte Ausnehmungen aufweist.

Es kann auch vorteilhaft sein, wenn die Aufnahmehülse einseitig eingebrachte Ausnehmungen aufweist.

Durch die einseitig eingebrachten Ausnehmungen wird bei einer Klebeverbindung zusätzlich eine formschlüssige Verbindung erreicht, sofern der Klebstoff in diese Ausnehmungen eingebracht ist.

Es kann zweckmäßig sein, wenn die Aufnahmehülse und/oder der Aufnahmezapfen zumindest teilweise eine von der Kreisform abweichende Querschnittsform aufweisen.

Für manche Fälle kann es von Vorteil sein, wenn die Aufnahmehülse und/oder der Aufnahmezapfen im Querschnitt im Wesentlichen rechteckig ausgebildet ist. Für gewisse Fälle kann es von Vorteil sein, wenn die Aufnahmehülse und/oder der Aufnahmezapfen im Querschnitt im Wesentlichen quadratisch ausgebildet ist. Für bestimmte Fälle kann es von Vorteil sein, wenn die Aufnahmehülse und/oder der Aufnahmezapfen im Querschnitt im Wesentlichen oval ausgebildet ist. Für andere Fälle kann es von Vorteil sein, wenn die Aufnahmehülse und/oder der Aufnahmezapfen im Querschnitt im Wesentlichen dreieckig ausgebildet ist. Für einige Fälle kann es von Vorteil sein, wenn die Aufnahmehülse und/oder der Aufnahmezapfen im Querschnitt im Wesentlichen polygonal ausgebildet ist. Für spezielle Fälle kann es von Vorteil sein, wenn die Aufnahmehülse und/oder der Aufnahmezapfen im Querschnitt im Wesentlichen trapezförmig ausgebildet ist.

Eine solche Aufnahmevorkehrung, insbesondere Aufnahmehülse und/oder Aufnahmezapfen, hat den Vorteil, dass der Achskörper neben der stoffschlüssigen Klebeverbindung zum jeweiligen Lenker auch eine formschlüssige Verbindung zum jeweiligen Lenker aufweist, wobei die im Wesentlichen auf das Achsmodul wirkenden Kräfte über den Formschluss zwischen Lenker und Achskörper weitergeleitet werden. Vorteilhaft wirken so keine Scherkräfte auf die Klebstoffverbindung, sondern allenfalls Druckkräfte, welche die Klebstoffverbindung nicht beeinträchtigen.

Die Ausbildung der Aufnahmevorkehrung als Aufnahmehülse und/oder Aufnahmezapfen hat zudem den Vorteil, dass die Klebefläche zwischen Lenker und Achskörper so groß wie nötig gewählt werden kann, um eine ausreichende Festigkeit der Verbindung zwischen dem Achskörper und dem jeweiligen Lenker zu erreichen. Zweckmäßigerweise kann die Klebeverbindung hierbei zumindest teilweise zwischen dem Innenmantel der Aufnahmehülse und dem von der Aufnahmehülse aufgenommenen Außenmantel des Achskörpers und/oder zumindest teilweise zwischen dem Außenmantel des Aufnahmezapfens und dem vom Aufnahmezapfen aufgenommenen Innenmantel des zumindest in diesem Bereich rohrartig ausgebildeten Achskörpers hergestellt sein. Rohrartig bedeutet in diesem und im folgenden Zusammenhang, dass zumindest der jeweilige Endbereich des Achskörpers als Hohlprofil ausgebildet ist, das stirnseitig offen, über den Umfang jedoch offen oder geschlossen sein kann.

Es kann besonders zweckmäßig sein, wenn die Klebeverbindung zwischen dem Innenmantel der Aufnahmehülse und dem von der Aufnahmehülse aufgenommenen Außenmantel des Achskörpers und/oder zwischen dem Außenmantel des Aufnahmezapfens und dem vom Aufnahmezapfen aufgenommenen Innenmantel des zumindest in diesem Bereich rohrartig ausgebildeten Achskörpers vollflächig hergestellt ist. Dadurch kann die Aufnahmevorkehrung insbesondere relativ kurz ausgebildet werden, die Festigkeit der Verbindung zwischen dem Achskörper und dem jeweiligen Lenker aber auch erhöht werden.

Die Aufnahmehülse und/oder der Aufnahmezapfen können über den Umfang geschlossen oder zumindest teilweise offen sein. Sind die Aufnahmehülse und/oder der Aufnahmezapfen über ihren Umfang geschlossen, kann mehr Fläche zur Bildung der Klebeverbindung zur Verfügung stehen. Sind die Aufnahmehülse und/oder der Aufnahmezapfen über ihren Umfang zumindest teilweise offen, kann dies das Einbringen und/oder Aufbringen des Achskörpers und/oder das Ein- bzw. Aufbringen des Klebstoff erleichtern.

Um die Ausbildung eines galvanischen Elements zwischen Lenker und Achskörper bei Verwendung entsprechender Werkstoffe zu verhindern, kann es von Vorteil sein, wenn die Klebeverbindung derart ist, dass der Klebstoff als Abstandhalter zwischen dem jeweiligen Lenker und dem Achskörper wirkt. Dadurch wird der Achskörper von dem jeweiligen Lenker quasi entkoppelt.

Die Aufnahmevorkehrung kann vorteilhaft Bestandteil des Lenkers sein und formt diese dann mit bzw. ist in dieser integriert. Insbesondere kann es vorteilhaft sein, wenn der Lenker mit wenigstens einem Teil der Aufnahmevorkehrung einstückig ausgebildet ist. Dadurch sind der Lenker und das Achsmodul besonders stabil sowie einfach und kostengünstig herstellbar.

Die Aufnahmevorkehrung selbst ist vorzugsweise ein- oder mehrteilig ausgebildet ist.

Es kann für gewisse Einsatzfälle vorteilhaft sein, wenn wenigstens ein Teil der Aufnahmehülse und/oder des Aufnahmezapfens rohrförmig ausgebildet ist. Für bestimmte Einsatzfälle kann es vorteilhaft sein, wenn wenigstens ein Teil der Aufnahmehülse und/oder des Aufnahmezapfens eimerförmig ausgebildet ist. Für andere Einsatzfälle kann es vorteilhaft sein, wenn wenigstens ein Teil der Aufnahmehülse und/oder des Aufnahmezapfens topfförmig ausgebildet ist, und für wieder andere Einsatzfälle kann es vorteilhaft sein, wenn wenigstens ein Teil der Aufnahmehülse und/oder des Aufnahmezapfens glockenförmig ausgebildet ist. Schließlich kann es für einige Einsatzzwecke sinnvoll sein, wenn wenigstens ein Teil der Aufnahmehülse und/oder des Aufnahmezapfens konisch ausgebildet ist.

Es kann hierbei von Vorteil sein, wenn der wenigstens eine Teil der Aufnahmehülse sich zum Achskörper hin konisch aufweitet. Es kann hierbei auch von Vorteil sein, wenn der wenigstens eine Teil der Aufnahmehülse und/oder des Aufnahmezapfens sich vom Achskörper weg konisch aufweitet.

Achskörper und Lenker können vorteilhaft ein Hybridleichtbauteil aus Kunststoff und Leichtmetall bilden. Es kann von Vorteil sein, wenn die Lenker aus Kunststoff und der Achskörper aus Leichtmetall bestehen, oder umgekehrt.

Es kann von Vorteil sein, wenn der Achskörper zumindest teilweise aus einem Leichtmaterial, vorzugsweise aus Leichtmetall, aus Kunststoff oder einem Verbund aus Leichtmetall und Kunststoff hergestellt ist.

Es kann zweckmäßig sein, wenn die Aufnahmevorkehrung zumindest teilweise in dem Lenker integriert ist. Es kann besonders zweckmäßig sein, wenn die Aufnahmevorkehrung zumindest teilweise durch den Lenker gebildet ist.

Ein besonderer Vorteil kann darin besehen, dass die Aufnahmevorkehrung und/oder der Lenker eine oder mehrere Verstärkungselemente, insbesondere Verstärkungsrippen, -gurte, -sicken, -wulste, -stege und/oder -durchbrüche, vorzugsweise jedoch mehrere Verstärkungsrippen aufweist.

Für einige Anwendungen kann es vorteilhaft sein, wenn der Achskörper auf der Höhe der Rotationsachsen der Räder angeordnet ist. Für andere Anwendungen kann es vorteilhaft sein, wenn der Achskörper zwischen den Rotationsachsen und der Anlenkung zur Befestigung der Lenker am Fahrzeugaufbau angeordnet ist. Für wieder andere Anwendungen kann es vorteilhaft sein, wenn der Achskörper auf der Höhe der Anlenkung zur Befestigung des Lenkers am Fahrzeugaufbau angeordnet ist.

Weiterhin kann es vorteilhaft sein, wenn wenigstens ein Teil der Aufnahmevorkehrung in einem Gießverfahren gefertigt ist. Insbesondere kann es vorteilhaft sein, wenn der Lenker mit Aufnahmevorkehrung als einstückig gegossenes Bauteil hergestellt ist. Es kann zweckmäßig sein, wenn die Aufnahmevorkehrung ein separat vom Gießen des Lenkers hergestelltes Teil ist, das zumindest teilweise im Lenker ein- oder angegossen ist.

Es kann auch vorteilhaft sein, wenn die Aufnahmevorkehrung, insbesondere die Aufnahmehülse und/oder der Aufnahmezapfen, für den Achskörper der Außen- und/oder der Innenkontur desselben, zumindest aber der Außen- und/oder der Innenkontur der entsprechenden Endbereiche des Achskörpers, angepasst ist.
Vorteilhaft kann der Lenker weiterhin eine einstückig mit diesem verbundene, vorzugsweise durch ein Gießverfahren hergestellte Stossdämpferaufnahme zur Befestigung eines Stossdämpfers zwischen Lenker und dem Fahrzeugaufbau aufweisen.

Es kann vorteilhaft sein, wenn der Lenker weiterhin eine einstückig mit diesem verbundene, vorzugsweise durch ein Gießverfahren hergestellte Federauflage oder -aufnahme zur Aufnahme einer entsprechenden Schraubenfeder aufweist.

Diese einzelnen, an den Lenkern des Achsmoduls angeordneten Aufnahmen können aber für bestimmte Einsatzzwecke auch durch Verschrauben, Verschweißen, Materialabtragung oder dergleichen an den Lenkern befestigt sein.

Besonders zweckmäßig kann es sein, wenn wenigstens ein Teil der Aufnahmevorkehrung oder das gegossene Bauteil durch Squeeze-Casting, Gegendruck-Kokillenguss (CPC), Druckguss, insbesondere durch Thixo-, Rheo- und Niederdruck-Sandguss, oder durch Schwerkraft-Kokillenguss hergestellt ist.

Besonders vorteilhaft und zweckmäßig kann es sein, wenn das Achsmodul als Verbundlenkerachse ausgebildet ist.

Der Begriff Verbundlenkerachse ist weit gefasst. Für bestimmte Einsatzzwecke kann es sich hierbei vorteilhaft um eine so genannte Torsionskurbelachse handeln. Für andere Einsatzzwecke kann es sich vorteilhaft um eine so genannte Koppellenkerachse handeln. Für wieder andere Einsatzfälle kann es sich um eine Verbundlenkerachse im engeren Sinne handeln. Von Torsionskurbelachse wird gesprochen, wenn die Querverbindung, insbesondere der Achskörper, sehr nah zur Radmitte liegt und damit ähnliche Eigenschaften einer Starrachse aufweist. Von Verbundlenkerachse im engeren Sinne wird gesprochen, wenn die Querverbindung, insbesondere der Achskörper, nahe zur Längslenkerlagerung liegt und damit ähnliche Eigenschaften einer Längslenkerachse aufweist. Von Koppellenkerachse wird gesprochen, wenn sich die Querverbindung, insbesondere der Achskörper, etwa am vorderen Drittel der Längslenker befindet und damit Vorteile der Längslenker- mit den Verbundlenkerachsen im engeren Sinne vereint.

Es kann vorteilhaft sein, wenn die Verbundlenkerachse einen in Fahrzeugquerrichtung ausgerichteten, biegesteif und torsionsweich ausgebildeten Achskörper oder Querträger und zwei in Fahrzeuglängsrichtung ausgerichtete, biege- und torsionssteif ausgebildete Lenker, insbesondere Längslenker, umfasst. Es kann vorteilhaft sein, wenn deren in Fahrzeuglängsrichtung betrachtet weitestgehend vorderen Enden fest mit dem Achskörper oder Querträger verbunden sind und an deren hinteren Enden jeweils ein Rad gelagert ist.

Es kann auch vorteilhaft sein, wenn das Achsmodul als Starrachse ausgebildet ist, wobei die Lenker dann quasi die Radträger bilden.

Die Lenker können vorzugsweise zusammen mit wenigstens einem Teil der Aufnahmevorkehrung im Gießverfahren hergestellt sein. Für bestimmte Einsatzzwecke kann es auch zweckmäßig sein, wenn die Lenker aus einem oder mehreren Spritzguss-, Strangpress-, Strangguss- oder Gussprofilen hergestellt sind. Für gewisse Anwendungsfälle kann es vorteilhaft sein, wenn wenigstens ein Teil des Lenkers und/oder der Aufnahmevorkehrung aus wenigstens einem Spritzguss-, Strangpress-, Strangguss oder Gussprofil hergestellt ist.

Der Achskörper kann vorteilhaft als T-, V- oder U-Profil oder als Rohrprofil mit vorzugsweise eingedrücktem Querschnitt in C-Form ausgebildet sein. Letztere Form sorgt für verbesserte Bedingungen im Verbindungsbereich zu den Lenkern bzw. den Längslenkern. Der Achskörper kann vorteilhaft aus einem Spritzguss-, Strangpress-, Strangguss- oder Gussprofil hergestellt sein.

Die Aufnahmevorkehrung kann vorteilhaft an einem Ende des Lenkers angeordnet sein. Am anderen Ende des Lenkers kann eine Aufnahme, vorzugsweise in Form einer Buchse, für Befestigungsmittel zur Befestigung des Achsmoduls am Fahrzeugaufbau angeordnet sein.

Es kann vorteilhaft sein, wenn innerhalb des Achskörpers ein Verbindungselement, vorzugsweise in Form eines Rohres oder einer Stange, angeordnet ist, welches an seinen Endbereichen mit dem jeweiligen Lenker verbunden, vorzugsweise verschraubt ist. Es kann von Vorteil sein, wenn die Verbindung derart ist, dass das Verbindungselement als ein die beiden Lenker verbindender Zuganker wirksam ist. Mit einem derartigen Zuganker kann nicht nur die Torsionssteifigkeit des Achskörpers eingestellt werden, sondern auch vorteilhaft eine vereinfachte Positionierung des Achskörpers zu den Lenkern erreicht werden, was zur einer optimierten Klebeverbindung führt.

Weitere vorteilhafte Ausgestaltungen der Erfindung ergeben sich auch aus der nachfolgenden Beschreibung einiger erfindungsgemäßer Ausführungsbeispiele sowie aus der zugehörigen Zeichnung. In dieser zeigen:
- Fig. 1: eine perspektivische Ansicht eines erfindungsgemäßen Achsmoduls,
- Fig. 2: eine Draufsicht auf das erfindungsgemäße Achsmodul nach Fig. 1,
- Fig. 3: eine Rückansicht auf das erfindungsgemäße Achsmodul nach Fig. 1,
- Fig. 4: im Längsschnitt eine Detailansicht als eine erste Ausführung der Verbindung zwischen dem Endbereich eines Achskörpers und eines Aufnahmezapfens, wie diese bei einem Achsmodul nach Fig. 1 bis 3 anwendbar ist,
- Fig. 5: im Längsschnitt eine Detailansicht als eine zweite Ausführung der Verbindung zwischen dem Endbereich eines Achskörpers und eines Aufnahmezapfens, wie diese bei einem Achsmodul nach Fig. 1 bis 3 anwendbar ist,
- Fig. 6: im Längsschnitt eine Detailansicht als eine dritte Ausführung der Verbindung zwischen dem Endbereich eines Achskörpers und eines Aufnahmezapfens, wie diese bei einem Achsmodul nach Fig. 1 bis 3 anwendbar ist,
- Fig. 7: im Längsschnitt eine Detailansicht als eine vierte Ausführung der Verbindung zwischen dem Endbereich eines Achskörpers und eines Aufnahmezapfens, wie diese bei einem Achsmodul nach Fig. 1 bis 3 anwendbar ist,
- Fig. 8: eine perspektivische Ansicht eines weiteren erfindungsgemäßen Achsmoduls,
- Fig. 9: im Längsschnitt eine Detailansicht als eine fünfte Ausführung der Verbindung zwischen dem Endbereich eines Achskörpers und einer Aufnahmehülse, wie diese bei einem Achsmodul nach Fig. 8 anwendbar ist,
- Fig. 10: eine perspektivische Ansicht eines weiteren erfindungsgemäßen Achsmoduls,
- Fig. 11: im Längsschnitt eine Detailansicht als eine sechste Ausführung der Verbindung zwischen dem Endbereich eines Achskörpers und einer Aufnahmehülse, wie diese bei einem Achsmodul nach Fig. 10 anwendbar ist,
- Fig. 12: eine perspektivische Ansicht eines weiteren erfindungsgemäßen Achsmoduls,
- Fig. 13: im Längsschnitt eine Detailansicht als eine siebte Ausführung der Verbindung zwischen dem Endbereich eines Achskörpers und einer Aufnahmehülse, wie diese bei einem Achsmodul nach Fig. 12 anwendbar ist,
- Fig. 14: eine perspektivische Ansicht eines weiteren erfindungsgemäßen Achsmoduls,
- Fig. 15: eine Rückansicht auf das erfindungsgemäße Achsmodul nach Fig. 14 und
- Fig. 16: eine Schnittansicht eines Details des erfindungsgemäßen Achsmodul nach Fig. 14.

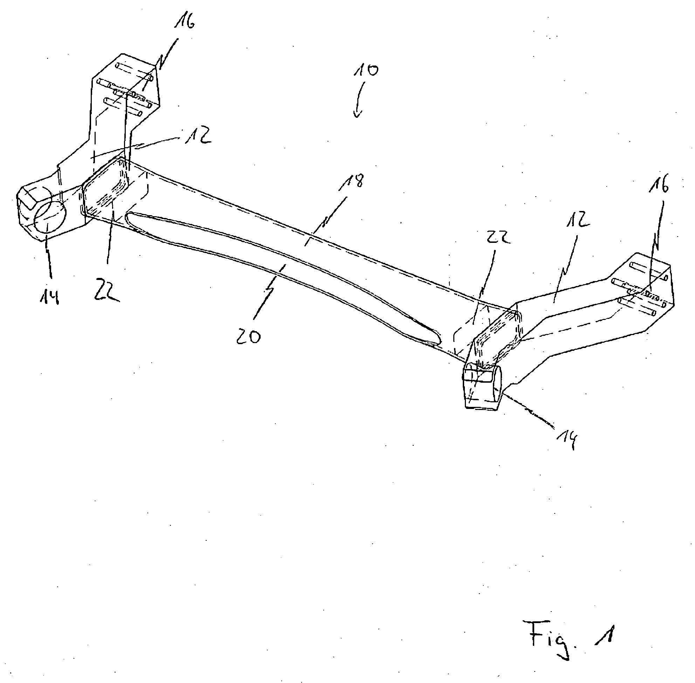

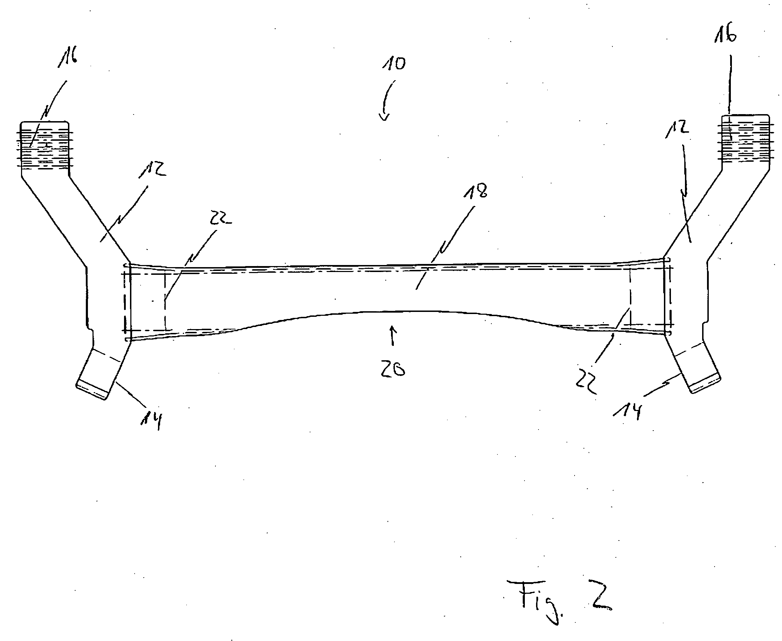

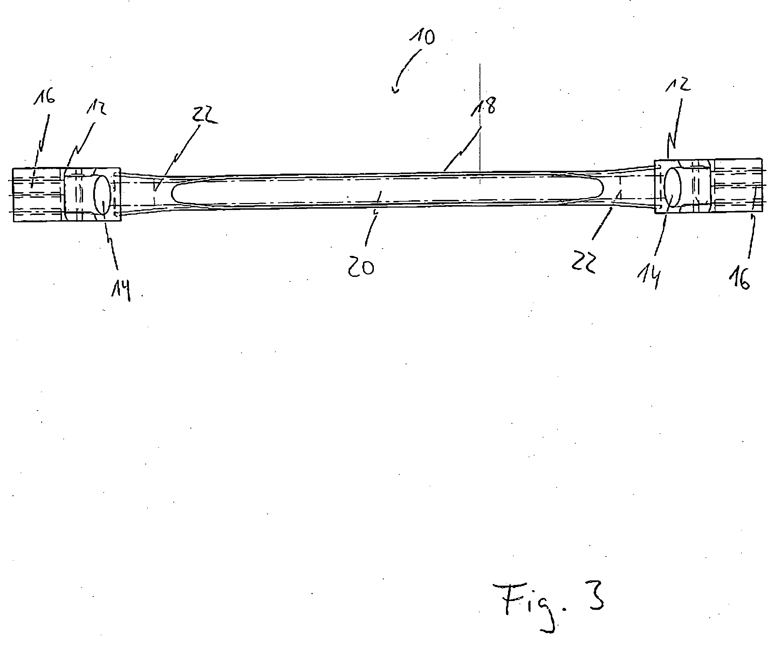

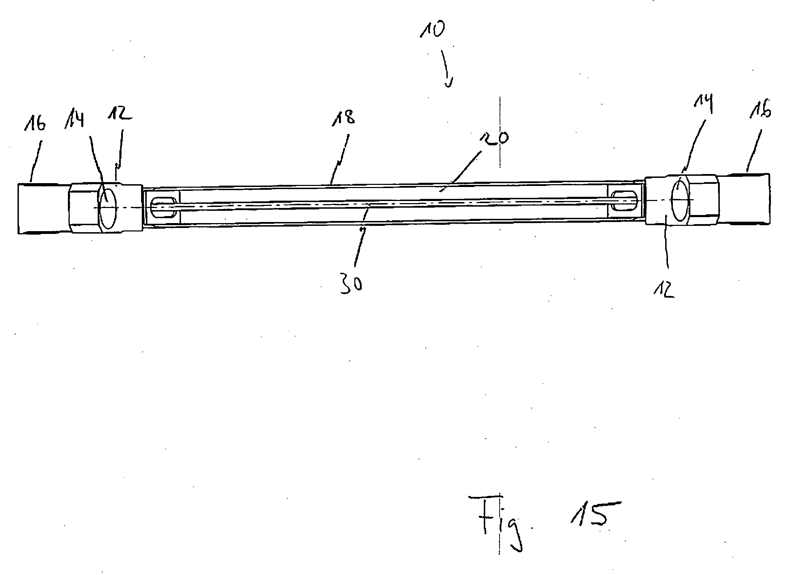

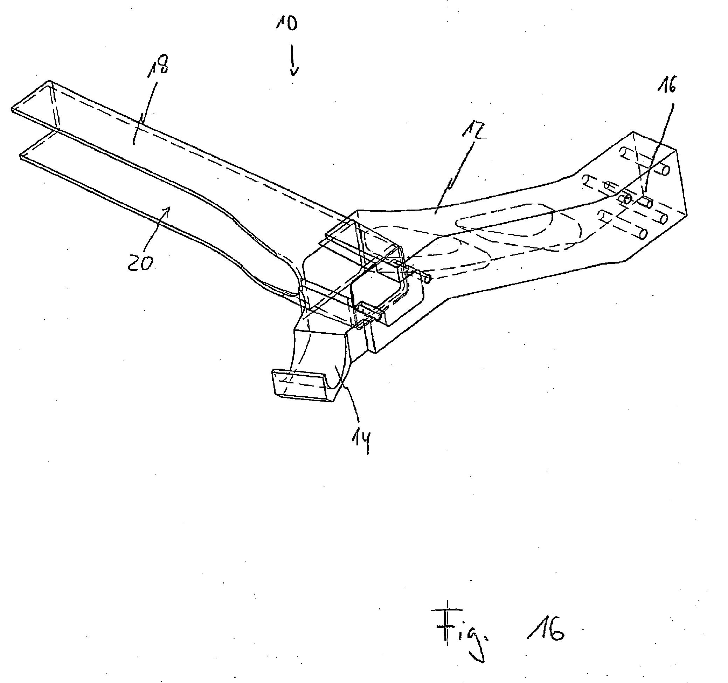

Werden in den Fig. 1 bis 16 gleiche Bezugsziffern verwendet, so bezeichnen diese gleiche Teile, so dass zwecks Vermeidung von Wiederholungen nicht bei jeder Figurenbeschreibung auf ein bereits beschriebenes Bauteil erneut eingegangen wird.

Fig. 1 bis 3 zeigen in verschieden Ansichten ein Achsmodul 10 in Form einer Verbundlenkerachse für ein Kraftfahrzeug, bestehend aus zwei Lenkern 12, die über an jeweils einem Ende des Lenkers 12 angeordnete Buchsen 14 am hier nicht dargestellten Fahrzeugaufbau befestigbar sind, am Bereich 16 die Räder der Achse tragen und über einen Achskörper 18 miteinander verbunden sind, wobei die Verbindung zwischen dem jeweiligen Endbereich des Achskörper 18 und dem jeweiligen Lenker 12 eine Klebeverbindung ist.

Der Achskörper 18 ist vorliegend als ein zumindest teilweise, nämlich in einem Bereich 20 zwischen den Endbereichen des Achskörpers 18 einseitig offenes Hohlprofil ausgebildet, dass jeweils in seinen Endbereichen stirnseitig ebenfalls offen, jedoch über den Umfang rohrartig geschlossen ist.

Wie bereits deutlich in Fig. 1 zu erkennen, weist der Achskörper 18 einen von der Kreisform abweichenden Querschnitt auf, wobei der Querschnitt als im Wesentlichen rechteckig bezeichnet werden kann.

Zur Herstellung einer Verbindung zwischen den Endbereichen des als Hohlprofil ausgebildeten Achskörpers 18 und dem jeweiligen Lenker 12 weist der Lenker 12 einen Aufnahmezapfen 22 auf, auf den jeweils der entsprechende Endbereich des Achskörper 18 aufgebracht ist.

Nach dem Aufbringen der Endbereiche des Achskörpers 18 auf den jeweiligen Aufnahmezapfen 20 des Lenkers 12 ist bereits eine formschlüssige Verbindung zwischen Achskörper 18 und Lenker 12 hergestellt, dass sich der Achskörper 18 aufgrund der von der Kreisform abweichenden Querschnittsform sowohl des Achskörpers 18 als auch des Aufnahmezapfens 22 nicht mehr gegenüber dem Lenker 12 verdrehen kann.

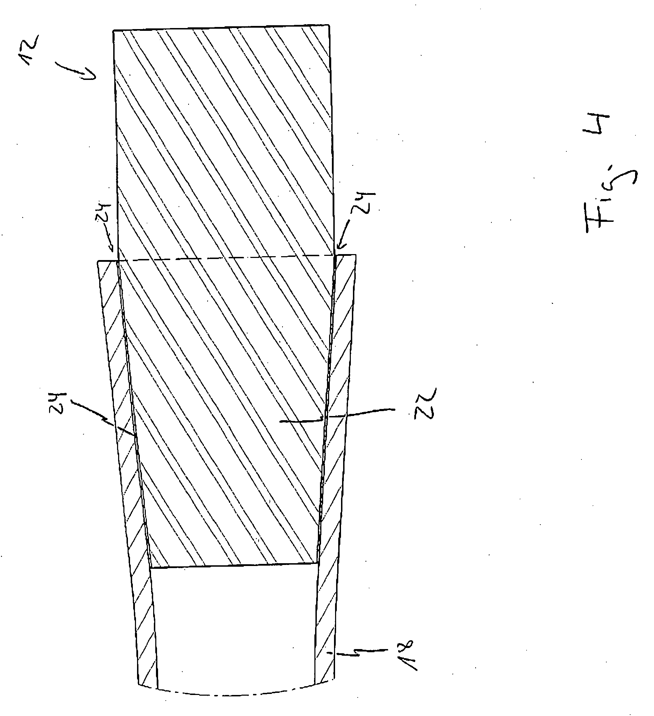

Zur Darstellung der erfindungsgemäßen Klebeverbindung zwischen Aufnahmezapfen 22 und Endbereich des Achskörpers 18 wird nunmehr auf die Fig. 4 bis 7 verwiesen, welche vier Ausführungsvarianten zeigen, wie sie bei einem Achsmodul 10 nach Fig. 1 bis 3 anwendbar sind.

Fig. 4 zeigt die Klebeverbindung zwischen einem konisch sich in Richtung Aufnahmezapfen 22 sich erweiternden Endbereich des Achskörpers und einem entsprechend sich konisch in Richtung Lenker 12 erweiternden Aufnahmezapfen 22. Die Klebeverbindung erfolgt hier vollflächig zwischen dem Außenmantel des Aufnahmezapfens 22 und dem vom Aufnahmezapfen 22 aufgenommenen Innenmantel des in diesem Bereich rohrartig ausgebildeten Achskörpers 18. Der Klebstoff 24 ist also zwischen den genannten Mantelflächen verteilt und bildet quasi neben der stoffschlüssigen Verbindung und Abdichtung auch gleichzeitig einen Abstandhalter bzw. eine Isolierung zwischen Achskörper 18 bzw. dessen Endbereich und Lenker 12 bzw. dessen Aufnahmezapfen 22, so dass dadurch beispielsweise bei Verwendung unterschiedlicher metallischer Werkstoffe für Achskörper 18 und Lenker 12 bzw. Aufnahmezapfen 22 die nachteilige Ausbildung eines galvanischen Elements mit entsprechenden Korrosionsschäden verhindert wird.

Die in Fig. 4 dargestellte Ausführung hat den Vorteil, dass der Endbereich des Achskörpers 18 nach dem Klebstoffauftrag auf den Aufnahmezapfen 22 bzw. den Innenmantel des Endbereichs des Achskörpers 18 relativ einfach und den Anforderungen entsprechend weit auf den sich konisch aufweitenden Aufnahmezapfen 22 aufgeschoben werden kann. Die Schicht aus Klebstoff 24 kann dabei relativ breit gedrückt werden, so dass eine optimierte Klebeverbindung entsteht. Außerdem steht eine relativ große Oberfläche in Korrelation auch mit der Länge des Aufnahmezapfens 22 zur Verfügung.

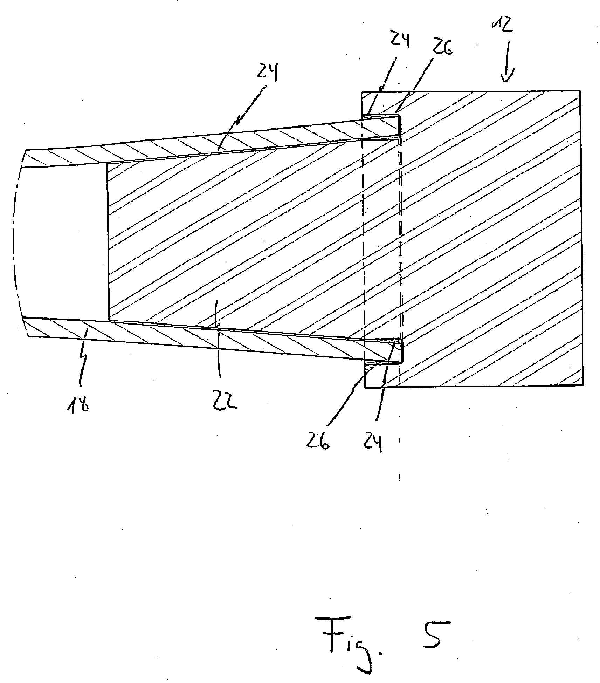

Die in Fig. 5 dargestellte Ausführung entspricht im Wesentlichen der Ausführung nach Fig. 4. Jedoch ist im Unterschied zu Fig. 4 eine den Aufnahmezapfen 22 umlaufende Nut im Lenker 12 eingebracht, wobei die Nut quasi eine Aufnahmehülse 26 bildet, in die eine Teil des Endbereichs des Achskörpers 18 eingebracht wird.

Somit liegt hier eine Kombination von Aufnahmezapfen 22 und Aufnahmehülse 26 vor, wobei die den Aufnahmezapfen 22 umgebenden Nut mit vorgegebener Tiefe vorteilhaft eine Anschlagfläche für den mit dem jeweiligen Endbereich auf den Aufnahmezapfen 22 aufgebrachten Achskörper 18 bildet, so dass das Positionieren reproduzierbar vereinfacht wird. Füllt sich die Nut beim Klebeverbinden zusätzlich mit Klebstoff, so stellt dieser vorteilhaft auch gleichzeitig ein Dichtmittel dar.

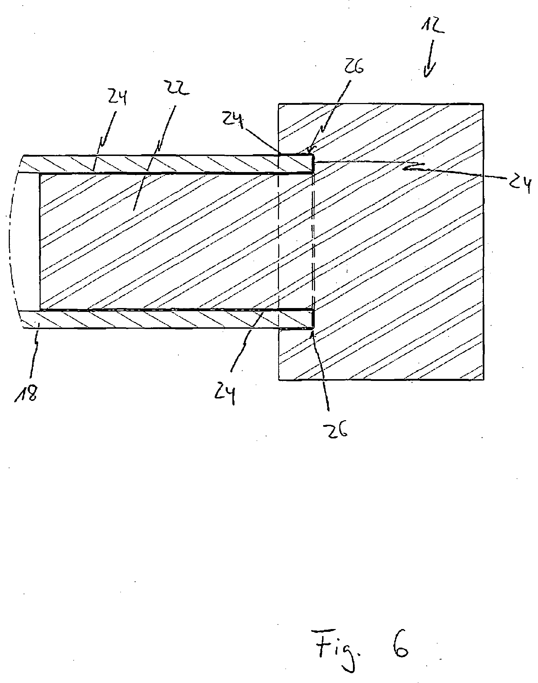

Die in Fig. 6 dargestellte Ausführung zeigt alternativ zur Ausführung gemäß Fig. 5 eine sich nicht konisch erweiternde Geometrie von Aufnahmezapfen 22 und Endbereich des Achskörpers 18.

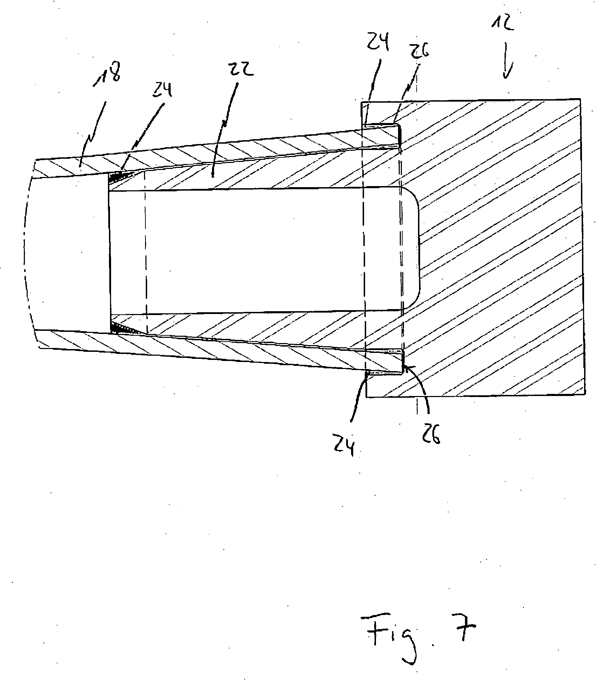

Die in Fig. 7 dargestellte Ausführung zeigt alternativ zur Ausführung gemäß Fig. 5 einen Aufnahmezapfen 22, der als Hohlprofil ausgebildet ist. Neben der dadurch erreichten Gewichtsoptimierung, lässt sich auch vorteilhaft die Nachgiebigkeit eines solchen Aufnahmezapfens 22 für bestimmte Anwendungen nutzen.

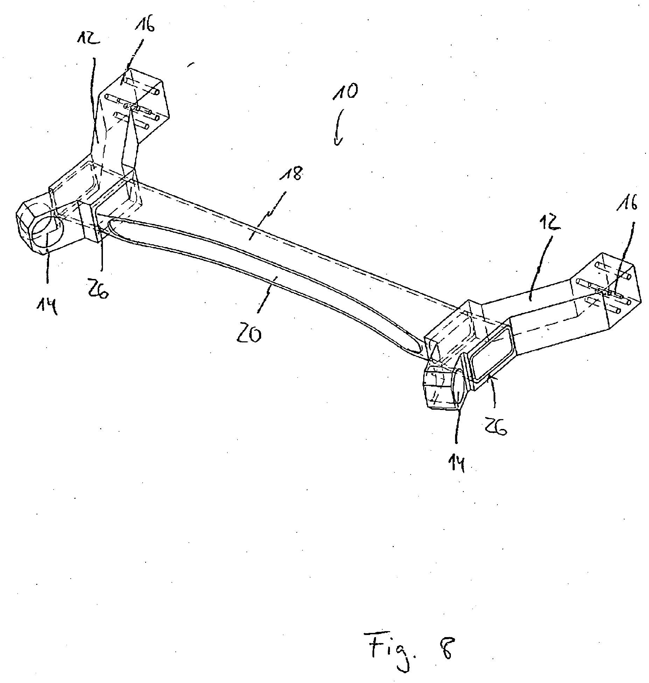

Fig. 8 zeigt ein weiteres erfindungsgemäßes Achsmodul, wobei zur allgemeinen Beschreibung auf die Beschreibung zur Fig. 1 verwiesen werden kann.

Zur Herstellung einer Verbindung zwischen den Endbereichen des als Hohlprofil ausgebildeten Achskörpers 18 und dem jeweiligen Lenker 12 weist der Lenker 12 eine Aufnahmehülse 26 in Form eines beidseitig offenen Lochs auf, in das jeweils der entsprechende Endbereich des Achskörper 18 eingebracht ist.

Nach dem Einbringen der Endbereiche des Achskörpers 18 in die jeweilige Aufnahmehülse 26 des Lenkers 12 wird eine formschlüssige Verbindung zwischen Achskörper 18 und Lenker 12 dadurch hergestellt, dass der Endbereich des Achskörpers 18 jeweils konisch aufgeweitet wird.

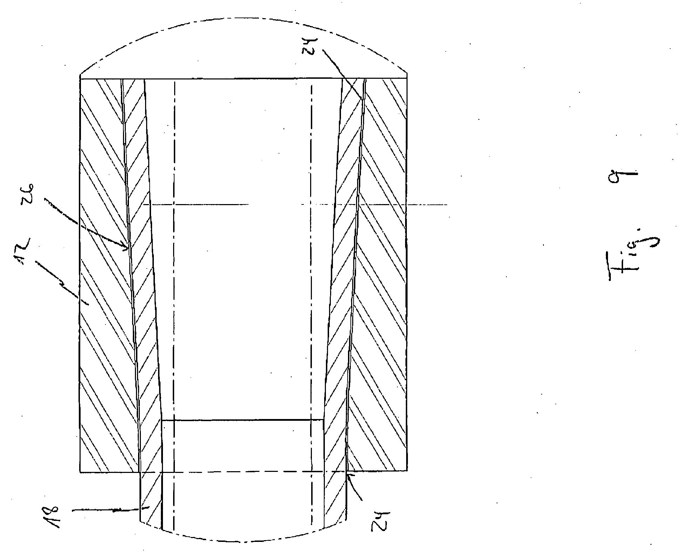

Hierzu ist die Aufnahmehülse 26 zu der vom Achskörper 18 weg weisenden Seite des Lenkers 12 konisch aufgeweitet. Dies ist im Detail in Fig. 9 dargestellt. Die Klebeverbindung ist zwischen dem Innenmantel der Aufnahmehülse 26 und dem von der Aufnahmehülse 26 aufgenommenen Außenmantel des Endbereichs des Achskörpers 18 vollflächig hergestellt, wobei der Klebstoff wiederum als Abstandhalter fungiert.

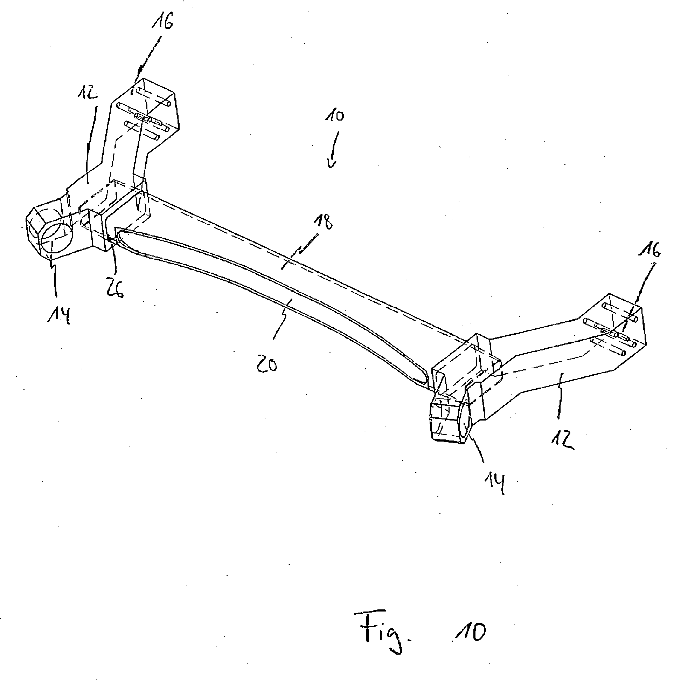

Fig. 10 zeigt ein weiteres erfindungsgemäßes Achsmodul, wobei zur allgemeinen Beschreibung auf die Beschreibung zur Fig. 1 verwiesen werden kann.

Zur Herstellung einer Verbindung zwischen den Endbereichen des als Hohlprofil ausgebildeten Achskörpers 18 und dem jeweiligen Lenker 12 weist der Lenker 12 eine Aufnahmehülse 26 in Form einer einseitig zum Achskörper 18 hin offenen sich konisch erweiternden Ausnehmung auf, in die jeweils der entsprechende Endbereich des Achskörpers 18 eingebracht ist.

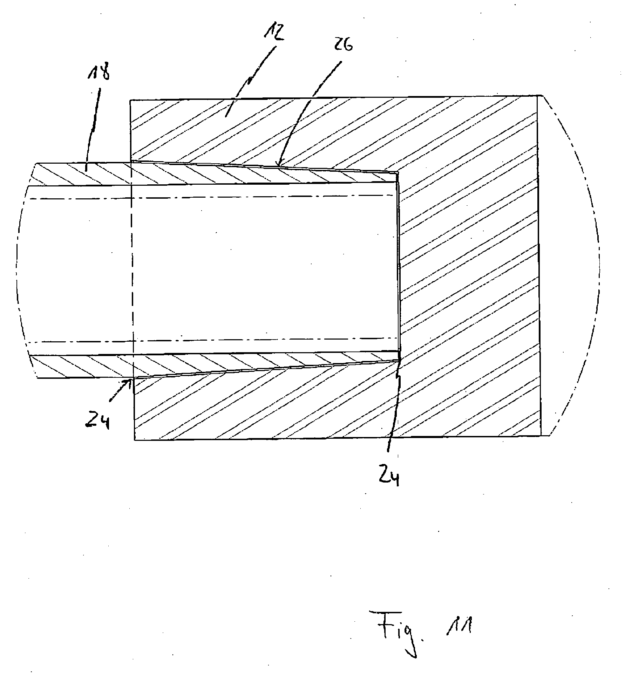

Dies ist im Detail in Fig. 11 dargestellt. Um ein Einbringen des Endbereichs des Achskörpers 18 in die Aufnahmehülse 26 zu ermöglichen, ist der Endbereich des Achskörpers 18 ebenfalls in die vorgenannte Richtung konisch erweitert. Vorliegend ist hierzu der Endbereich des Achskörpers 18 Material abtragend, insbesondere Span abhebend bearbeitet. Dadurch lassen sich insbesondere Toleranzen zwischen Achskörper und Lenker in zweckmäßiger Weise einstellen und eine definierte Klebefläche herstellen.

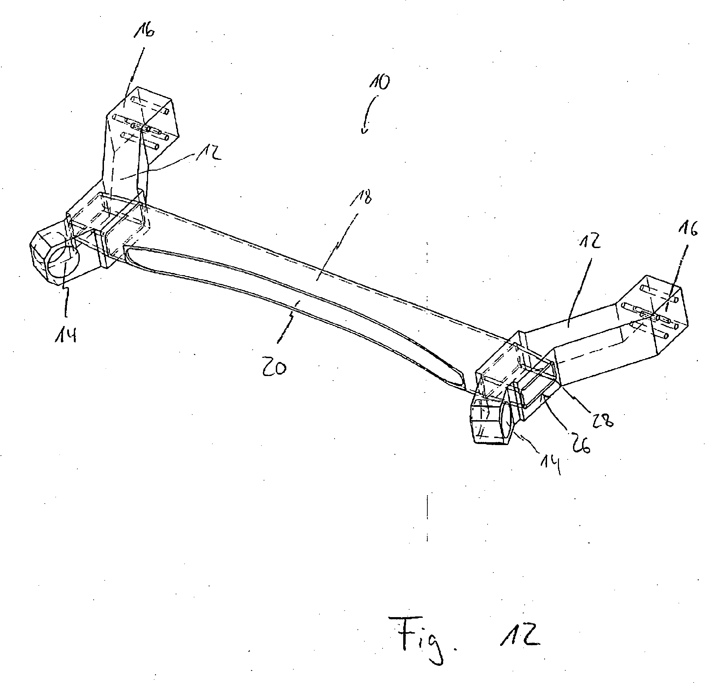

Fig. 12 zeigt ein weiteres erfindungsgemäßes Achsmodul, wobei zur allgemeinen Beschreibung auf die Beschreibung zur Fig. 1 verwiesen werden kann.

Zur Herstellung einer Verbindung zwischen den Endbereichen des als Hohlprofil ausgebildeten Achskörpers 18 und dem jeweiligen Lenker 12 weist der Lenker 12 eine Aufnahmehülse 26 in Form eines beidseitig offenen sich zum Achskörper 18 hin konisch erweiternden Lochs auf, in das jeweils der entsprechende sich in gleicher Richtung konisch erweiternde Endbereich des Achskörper 18 eingebracht ist.

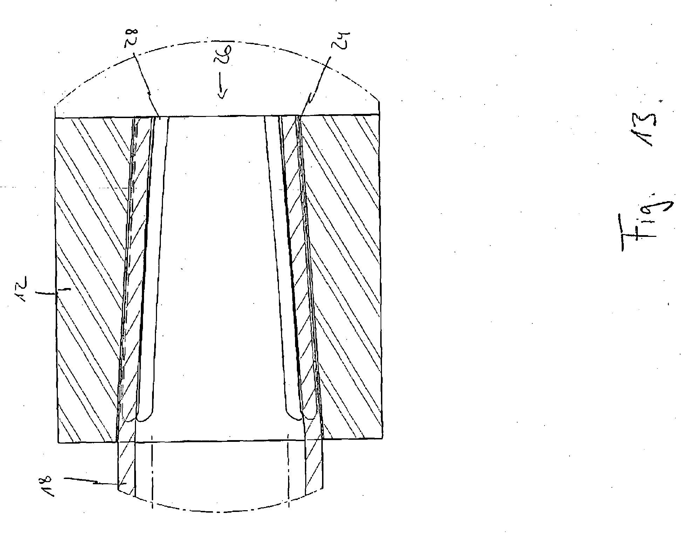

Die Verbindung ist im Detail in Fig. 13 dargestellt. Die Klebeverbindung ist zwischen dem Innenmantel der Aufnahmehülse 26 und dem von der Aufnahmehülse 26 aufgenommenen Außenmantel des Endbereichs des Achskörpers 18 vollflächig hergestellt, wobei der Klebstoff wiederum als Abstandhalter fungiert. In den Endbereichen, hier vorzugsweise in den Eckbereichen des Achskörpers 18 sind Längsschlitze 28 eingebracht, die ein Zusammenfügen von Achskörper 18 und Lenker 12 ermöglichen bzw. erleichtern, da sich der Endbereich des Achskörpers 18 beim Zusammenfügen entsprechend der Konizität der Aufnahmehülse 26 verformt. Mit einem Gegenwerkzeug, welches von der anderen Seite in die Aufnahmehülse 26 eingebracht von innen gegen die Flächen des jeweiligen Endbereichs des Achskörpers 18 drückt, kann eine zuverlässige Klebeverbindung zwischen Achskörper 18 und Lenker 12 erreicht werden.

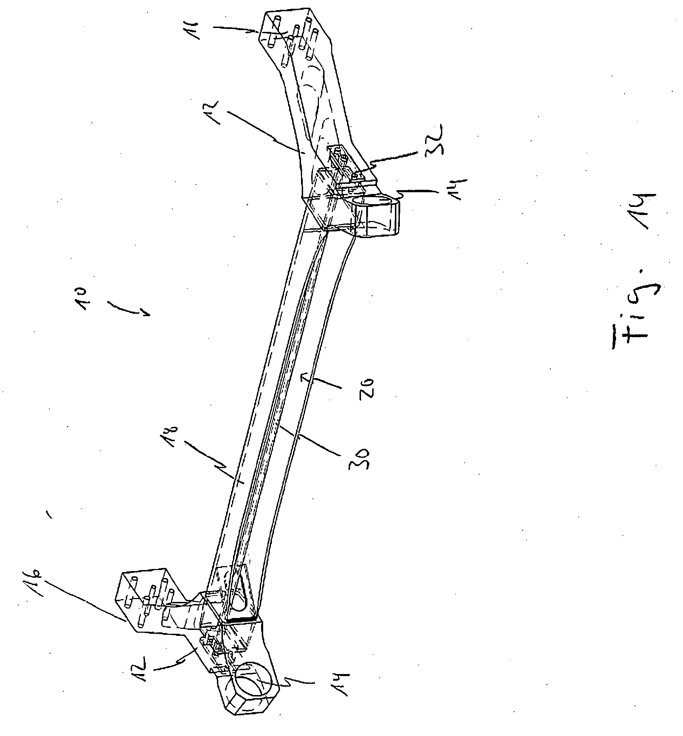

Fig. 14 bis 16 zeigen ein weiteres erfindungsgemäßes Achsmodul, wobei zur allgemeinen Beschreibung auf die Beschreibung zur Fig. 1 verwiesen werden kann. Die Klebeverbindung ist zwischen dem Innenmantel der Aufnahmehülse 26 und dem von der Aufnahmehülse 26 aufgenommenen Außenmantel des Endbereichs des Achskörpers 18 vollflächig hergestellt, wobei der Klebstoff wiederum als Abstandhalter fungiert.

Das in den Fig. 14 bis 16 gezeigte Achsmodul 10 weist vorteilhaft innerhalb des Achskörpers 18 ein Verbindungselement 30 auf, vorzugsweise in Form eines Rohres oder einer Stange, welches an seinen Endbereichen mit dem jeweiligen Lenker 12 mittels Schrauben 32 verschraubt ist, derart, dass das Verbindungselement 30 als ein die beiden Lenker 12 verbindender Zuganker wirksam ist. Mit einem derartigen Zuganker kann nicht nur die Torsionssteifigkeit des Achskörpers 18 eingestellt werden, sondern auch vorteilhaft eine vereinfachte Positionierung des Achskörpers 18 zu den Lenkern 12 erreicht werden, was zur einer optimierten Klebeverbindung führt.

## Patentansprüche

1. Achsmodul (10) für ein Kraftfahrzeug, bestehend aus zwei Lenkern (12), die am Fahrzeugaufbau befestigbar sind, die Räder der Achse tragen und über einen Achskörper (18) miteinander verbunden sind, wobei die Verbindung zwischen Achskörper (18) und dem jeweiligen Lenker (12) eine Klebeverbindung ist, **dadurch gekennzeichnet, dass** jeder der Lenker (12) eine Aufnahmevorkehrung in Form eines Aufnahmezapfens (22) und einer den Aufnahmezapfen (22) umlaufenden im Lenker (12) angeordnete Nut für den Achskörper (18) aufweist.

2. Achsmodul (10) nach dem Oberbegriff des Anspruchs 1, **dadurch gekennzeichnet, dass** ein Verbindungselement (30), vorzugsweise in Form eines Rohres oder einer Stange, über die Länge des Achskörpers innerhalb des Achskörpers (18) angeordnet ist, welches mit seinem einen Endbereich mit dem einen Lenker und mit seinem anderen Endbereich mit dem anderen Lenker (12) verbunden ist, wobei die Verbindung mittels Verbindungselement (30) eine zusätzliche Verbindung zur vorhandenen Klebeverbindung des Achskörpers mit dem jeweiligen Lenker darstellt, wobei das Verbindungselement (30) derart mit den Lenkern (12) verbunden ist, dass es als ein die beiden Lenker (12) verbindender Zuganker wirksam ist.

3. Achsmodul (10) nach Anspruch 2, **dadurch gekennzeichnet, dass** jeder der Lenker (12) eine Aufnahmevorkehrung in Form einer Aufnahmehülse (26) für den Achskörper (18) aufweist, welche über ihren Umfang zumindest teilweise offen ist.

4. Achsmodul (10) nach einem der Ansprüche 1 bis 3, **dadurch gekennzeichnet, dass** der Achskörper (18) mit dem jeweiligen Lenker (12) zusätzlich durch Verschrauben, Nieten, Klammern, Verpressen, Umbördeln und/oder Durchsetzfügen verbunden ist.

5. Achsmodul (10) nach einem der Ansprüche 1 bis 4, **dadurch gekennzeichnet, dass** dieses (10), vorzugsweise der jeweilige Lenker (12), zumindest teilweise aus einem Leichtmaterial hergestellt ist, wobei das Leichtmaterial vorzugsweise ein Leichtmetall, ein Kunststoff oder ein Verbund aus Leichtmetall und Kunststoff ist, wobei das Leichtmetall vorzugsweise aus Aluminium, Magnesium, Zink oder Legierungen mit einem oder mehreren dieser Metalle besteht, wobei der Kunststoff vorzugsweise ein Polyamid, insbesondere ein glasfaserverstärktes Polyamid, ist.

6. Achsmodul (10) nach Anspruch 2, **dadurch gekennzeichnet, dass** jeder der Lenker (12) eine Aufnahmevorkehrung, insbesondere eine Aufnahmehülse (26), insbesondere als Nut, und/oder einen Aufnahmezapfen (22), für den Achskörper (18) aufweist.

7. Achsmodul (10) nach Anspruch 1, **dadurch gekennzeichnet, dass** die Nut und/oder der Aufnahmezapfen (22) zumindest teilweise eine von der Kreisform abweichende Querschnittsform aufweisen, wobei die Nut und/oder der Aufnahmezapfen (22) im Querschnitt vorzugsweise im Wesentlichen rechteckig, quadratisch, oval, dreieckig, polygonal oder trapezförmig ausgebildet sind.

8. Achsmodul (10) nach Anspruch 1, **dadurch kennzeichnet, dass** die die Nut und/oder der Aufnahmezapfen (22) über den Umfang entweder geschlossen oder zumindest teilweise offen sind.

9. Achsmodul (10) nach Anspruch 3 oder 6, **dadurch kennzeichnet, dass** die Klebeverbindung zumindest teilweise zwischen dem Innenmantel der Aufnahmehülse und dem von der Aufnahmehülse (26) aufgenommenen Außenmantel des Achskörpers (18) hergestellt ist, wobei vorzugsweise die Klebeverbindung zwischen dem Innenmantel der Aufnahmehülse (26) und dem von der Aufnahmehülse (26) aufgenommenen Außenmantel des Achskörpers (18) vollflächig hergestellt ist.

10. Achsmodul (10) nach einem der Ansprüche 1 oder 6 bis 8, **dadurch kennzeichnet, dass** die Klebeverbindung zumindest teilweise zwischen dem Außenmantel des Aufnahmezapfens (22) und dem vom Aufnahmezapfen (22) aufgenommenen Innenmantel des zumindest in diesem Bereich rohrartig ausgebildeten Achskörpers (18) hergestellt ist, wobei vorzugsweise die Klebeverbindung zwischen dem Außenmantel des Aufnahmezapfens (22) und dem vom Aufnahmezapfen (22) aufgenommenen Innenmantel des zumindest in diesem Bereich rohrartig ausgebildeten Achskörpers (18) vollflächig hergestellt ist.

11. Achsmodul (10) nach einem der Ansprüche 1 bis 10, **dadurch kennzeichnet, dass** die Klebeverbindung derart ist, dass der Klebstoff (24) als Abstandhalter zwischen dem jeweiligen Lenker (12) und dem Achskörper (18) wirkt.

12. Achsmodul (10) nach Anspruch 1, **dadurch gekennzeichnet, dass** die Nut und/oder der Aufnahmezapfen (22) zumindest teilweise in dem Lenker (12) integriert oder durch den Lenker (12) gebildet ist.

13. Achsmodul (10) nach Anspruch 6, **dadurch gekennzeichnet, dass** die Aufnahmehülse (26) und/oder der Aufnahmezapfen (22) zumindest teilweise in dem Lenker (12) integriert oder durch den Lenker (12) gebildet ist.

14. Achsmodul (10) nach einem der Ansprüche 1, 3 oder 6, **dadurch gekennzeichnet, dass** der Lenker (12) mit Aufnahmevorkehrung als einstückig gegossenes Bauteil hergestellt ist oder dass die Aufnahmevorkehrung ein separat vom Gießen des Lenkers (12) hergestelltes Teil ist, das zumindest teilweise im Lenker (12) eingegossen ist.

15. Achsmodul (10) nach einem der Ansprüche 1, 3, 6 oder 14, **dadurch gekennzeichnet, dass** wenigstens ein Teil der Aufnahmevorkehrung oder das gegossene Bauteil durch Squeeze-Casting, Gegendruck-Kokillenguss (CPC), Druckguss, insbesondere durch Thixo-, Rheo- und Niederdruck-Sandguss, oder durch Schwerkraft-Kokillenguss hergestellt ist.

16. Achsmodul (10) nach einem der Ansprüche 1 bis 13, **dadurch gekennzeichnet, dass** der Lenker (12), die Aufnahmevorkehrung und/oder der Achskörper (18) zumindest teilweise als Spritzguss-, Strangpress-, Strangguss- oder vorzugsweise Gussprofil ausgebildet sind.

17. Achsmodul (10) nach Anspruch 6, **dadurch gekennzeichnet, dass** die Aufnahmehülse (26) und/oder der Aufnahmezapfen (22) zumindest teilweise eine von der Kreisform abweichende Querschnittsform aufweisen, wobei die Aufnahmehülse (26) und/oder der Aufnahmezapfen (22) im Querschnitt vorzugsweise im Wesentlichen rechteckig, quadratisch, oval, dreieckig, polygonal oder trapezförmig ausgebildet sind.

## Claims

1. An axle module (10) for a motor vehicle, consisting of two control arms (12) which can be affixed to the vehicle structure, bear the wheels of the axle and are connected to one another via an axle body (18), wherein the connection between axle body (18) and the respective control arm (12) is an adhesive connection, **characterised in that** each of the control arms (12) has a receiving arrangement in the form of a receiving pin (22) and a groove, which is disposed in the control arm (12) and which runs around the receiving pin (22), for the axle body (18).

2. The axle module (10) according to the preamble of claim 1, **characterised in that** a connection member (30), preferably in the form of a tube or a rod, is disposed over the length of the axle body inside the axle body (18), said connection member (30) being connected by its end region to one control arm and by its other end region to the other control arm (12), wherein the connection by means of the connection member (30) represents a connection in addition to the present adhesive connection of the axle body to the respective control arm, wherein the connection member (30) is connected to the control arms (12) such that it is effective as a tie rod connecting the two control arms (12).

3. The axle module (10) according to claim 2, **characterised in that** each of the control arms (12) has a receiving arrangement in the form of a receiving sleeve (26) for the axle body (18), said receiving arrangement being at least partially open over its circumference.

4. The axle module (10) according to any one of claims 1 to 3, **characterised in that** the axle body (18) is additionally connected to the respective control arm (12) by screwing, riveting, clamping, pressing, beading and/or clinching.

5. The axle module (10) according to any one of claims 1 to 4, **characterised in that** this (10), preferably the respective control arm (12), is made at least partially from a light material, wherein the light material is preferably a light metal, a plastic or a composite of light metal and plastic, wherein the light metal preferably consists of aluminium, magnesium, zinc or alloys with one or more of these metals, wherein the plastic is preferably a polyamide, in particular a glass fibre-reinforced polyamide.

6. The axle module (10) according to claim 2, **characterised in that** each of the control arms (12) has a receiving arrangement, in particular a receiving sleeve (26), in particular as a groove, and/or a receiving pin (22), for the axle body (18).

7. The axle module (10) according to claim 1, **characterised in that** the groove and/or the receiving pin (22) at least partially have a cross-sectional shape which deviates from the circular shape, wherein the groove and/or the receiving pin (22) are configured to be preferably substantially rectangular, square, oval, triangular, polygonal or trapezoid in cross-section.

8. The axle module (10) according to claim 1, **characterised in that** the groove and/or the receiving pin (22) are either closed or at least partially open over the circumference.

9. The axle module (10) according to claim 3 or 6, **characterised in that** the adhesive connection is produced at least partially between the inner sheath of the receiving sleeve and the outer sheath, which is received by the receiving sleeve (26), of the axle body (18), wherein the adhesive connection is preferably produced, over the whole surface, between the inner sheath of the receiving sleeve (26) and the outer sheath, which is preferably received by the receiving sleeve (26), of the axle body (18).

10. The axle module (10) according to any one of claims 1 or 6 to 8, **characterised in that** the adhesive connection is produced at least partially between the outer sheath of the receiving pin (22) and the inner sheath, which is received by the receiving pin (22), of the axle body (18) which is configured to be tubular at least in this region, wherein the adhesive connection is preferably produced, over the whole surface, between the outer sheath of the receiving pin (22) and the inner sheath, which is received by the receiving pin (22), of the axle body (18) which is configured to be tubular at least in this region.

11. The axle module (10) according to any one of claims 1 to 10, **characterised in that** the adhesive connection is such that the adhesive (24) acts as a spacer between the respective control arm (12) and the axle body (18).

12. The axle module (10) according to claim 1, **characterised in that** the groove and/or the receiving pin (22) is integrated at least partially in the control arm (12) or is formed by the control arm (12).

13. The axle module (10) according to claim 6, **characterised in that** the receiving sleeve (26) and/or the receiving pin (22) is integrated at least partially in the control arm (12) or is formed by the control arm (12).

14. The axle module (10) according to any one of claims 1, 3 or 6, **characterised in that** the control arm (12) is produced with the receiving arrangement as an integrally cast component or **in that** the receiving arrangement is a part which is produced separately from the casting of the control arm (12) and which is at least partially cast in the control arm (12).

15. The axle module (10) according to any one of claims 1, 3, 6 or 14, **characterised in that** at least one part of the receiving arrangement or the cast component is produced by squeeze casting, counter-pressure permanent mould casting (CPC), pressure casting, in particular by thixocasting, rheocasting and low-pressure sand casting, or by gravity permanent mould casting.

16. The axle module (10) according to any one of claims 1 to 13, **characterised in that** the control arm (12), the receiving arrangement and/or the axle body (18) are configured at least partially as an injection-moulded, extruded, continuously cast or preferably cast profile.

17. The axle module (10) according to claim 6, **characterised in that** the receiving sleeve (26) and/or the receiving pin (22) at least partially have a cross-sectional shape which deviates from the circular shape, wherein the receiving sleeve (26) and/or the receiving pin (22) are configured to be preferably substantially rectangular, square, oval, triangular, polygonal or trapezoid in cross-section.

## Revendications

1. Module d'essieu (10) destiné à un véhicule à moteur, le module d'essieu étant constitué par deux guides d'essieu (12) qui peuvent être fixés à la carrosserie du véhicule, portent les roues de l'essieu et sont reliés l'un à l'autre via un corps d'essieu (18), la liaison entre le corps d'essieu (18) et le guide d'essieu respectif (12) étant une liaison collée, **caractérisé en ce que** chaque guide d'essieu (12) présente un dispositif de réception sous la forme d'un tenon de réception (22) et d'une rainure circulaire pour le corps d'essieu, rainure circulaire, qui est disposée dans le guide d'essieu (12) et entoure le tenon de réception (22).

2. Module d'essieu (10) suivant le préambule de la revendication 1, **caractérisé en ce qu'**un élément de liaison (30), de préférence sous la forme d'un tube ou d'une barre, est disposé à l'intérieur du corps d'essieu (18), sur toute la longueur de celui-ci, élément de liaison, qui est relié, avec l'une de ses zones d'extrémité, à l'un des guide d'essieu et, avec l'autre zone d'extrémité, à l'autre guide d'essieu (12), la liaison moyennant l'élément de liaison (30) constituant une liaison supplémentaire à la liaison collée entre le corps d'essieu et le guide d'essieu respectif, l'élément de liaison (30) étant relié aux guide d'essieu (12) de façon qu'il agit comme un tirant reliant les deux guides d'essieu (12).

3. Module d'essieu (10) suivant la revendication 2, **caractérisé en ce que** chacun des guides d'essieu (12) présente un dispositif de réception sous la forme d'une douille de réception (26) pour le corps d'essieu (18), douille de réception, qui est au moins partiellement ouverte à sa périphérie.

4. Module d'essieu (10) suivant une des revendications 1 à 3, **caractérisé en ce que** le corps d'essieu (18) est, en outre, relié au guide d'essieu respectif (12) par vissage, agrafage, rivetage, sertissage, rabattement, assemblage par interpénétration.

5. Module d'essieu (10) suivant une des revendications 1 à 4, **caractérisé en ce que** celui-ci (10), de préférence, le guide d'essieu respectif (12), est réalisé au moins partiellement en un matériau léger, le matériau léger étant, de préférence, un métal léger, une matière artificielle ou un composite de métal léger et de matière artificielle, le métal léger étant, de préférence, constitué d'aluminium, de magnésium, de zinc ou d'un composite d'alliages avec un ou plusieurs de ces métaux, la matière artificielle étant de préférence un polyamide, en particulier un polyamide renforcé par des fibres de verre.

6. Module d'essieu (10) suivant la revendication 2, **caractérisé en ce que** chacun des guides d'essieu (12) présente un dispositif de réception pour le corps d'essieu (18), en particulier une douille de réception (26), en particulier comme rainure, et/ou un tenon de réception (22).

7. Module d'essieu (10) suivant la revendication 1, **caractérisé en ce que** la rainure et/ou le tenon de réception (22) présentent au moins partiellement une section transversale, qui est au moins partiellement différente de la forme circulaire, la rainure et/ou le tenon de réception (22) étant, en section transversale, conçus de préférence sensiblement rectangulaire, carrée, ovale, triangulaire, polygonale ou trapézoïdale.

8. Module d'essieu (10) suivant la revendication 1, **caractérisé en ce que** la rainure et/ou le tenon de réception (22) sont soit fermés soit partiellement ouverts à leur périphérie.

9. Module d'essieu (10) suivant une des revendications 3 ou 6, **caractérisé en ce que** la liaison collée est réalisée au moins partiellement entre la paroi intérieure de la douille de réception et la paroi extérieure du corps d'essieu (18) reçue par la douille de réception, la liaison collée entre la paroi intérieure de la douille de réception (26) et la paroi extérieure du corps d'essieu (18), reçue par la douille de réception, étant de préférence réalisée de façon à recouvrir toute la surface.

10. Module d'essieu (10) suivant une des revendications 1 ou 6 à 8, **caractérisé en ce que** la liaison collée est réalisée au moins partiellement entre la paroi extérieure du tenon de réception (22) et la paroi intérieure, reçue par le tenon de réception (22), du corps d'essieu, qui est, au moins dans cette zone, conçu en forme de tube, la liaison collée entre la paroi extérieure du tenon de réception (22) et la paroi intérieure, reçue par le tenon de réception (22), du corps d'essieu (18) qui est, au moins dans cette zone, conçu en forme de tube, est réalisée de façon à recouvrir toute la surface.

11. Module d'essieu (10) suivant une des revendications 1 à 10, **caractérisé en ce que** la liaison collée est telle que la colle (24) agit comme écarteur entre le guide d'essieu respectif (12) et le corps d'essieu (18).

12. Module d'essieu (10) suivant la revendication 1, **caractérisé en ce que** la rainure et/ou le tenon de réception (22) sont au moins partiellement intégrés dans le guide d'essieu (12) ou formés par celui-ci.

13. Module d'essieu (10) suivant la revendication 6, **caractérisé en ce que** la douille de réception (26) et/ou le tenon de réception (22) sont au moins partiellement intégrés dans le guide d'essieu (12) ou formés par celui-ci.

14. Module d'essieu (10) suivant une des revendications 1, 3 ou 6, **caractérisé en ce que** le guide d'essieu (12) et le dispositif de réception sont réalisés comme composant moulé formant une seule pièce ou **en ce que** le dispositif de réception est une pièce réalisée séparément du moulage du guide d'essieu (12) qui est au moins partiellement encapsulée dans le guide d'essieu (12).

15. Module d'essieu (10) suivant une des revendications 1, 3, 6 ou 14, **caractérisé en ce qu'**au moins une partie du dispositif de réception ou le composant moulé est réalisé par moulage par compression, moulage en coquille par contre-pression (CPC), moulage sous pression, moulage en sable thixiotropique, rhéologique et basse pression ou moulage en coquille par gravité.

16. Module d'essieu (10) suivant une des revendications 1 à 13, **caractérisé en ce que** le guide d'essieu (12), le dispositif de réception et/ou le corps d'essieu sont conçus au moins partiellement comme profilé moulé par injection, extrusion, coulée en continu ou de préférence comme profilé moulé.

17. Module d'essieu (10) suivant la revendication 6, **caractérisé en ce que** la douille de réception (26) et/ou le tenon de réception (22) présentent une forme transversale qui est au moins partiellement différente de la forme circulaire, la douille de réception (26) et/ou le tenon de réception (22) étant, en section transversale, conçus de préférence sensiblement rectangulaire, carrée, ovale, triangulaire, polygonale ou trapézoïdale.
